# EUROPÄISCHE PATENTANMELDUNG

(11) **EP 1 004 903 A1**
(43) Veröffentlichungstag der Anmeldung: **31.05.2000**
(21) Anmeldenummer: 99122789.3
(22) Anmeldetag: 16.11.1999
(51) Int. Cl.: G02B 5/32, G03H 1/26, G03B 21/56

(54) **Verfahren zur Herstellung eines holographischen Bildschirms zur autostereoskopischen oder stereoskopischen Wiedergabe von Bildern und Laufbildern**

(30) Priorität: 26.11.1998 DE 19854700; 21.10.1999 DE 19950844
(71) Anmelder: HSM Holographic Systems München GmbH, 85652 Ottersberg (DE)
(72) Erfinder: Dausmann, Günther, 85435 Erding (DE)
(74) Vertreter: Gossel, Hans K., Dipl.-Ing.

(57) **Zusammenfassung**

Die Erfindung betrifft einen holografischen Bildschirm zur autostereoskopischen oder stereoskopischen Wiedergabe von Bildern und Laufbildern, sowie ein Verfahren zur Herstellung eines derartigen Bildschirms. Der erfindungsgemäße Bildschirm wird aus einer Vielzahl kleinformatiger Einzelhologramme zusammengesetzt, in die jeweils mindestens ein vertikaler Streifen einbelichtet wurde. Bei der Rekonstruktion mit einem alle holografischen Flächenelemente beleuchtenden Rekonstruktionsstrahl erscheinen sämtliche einbelichteten vertikalen Streifen an derselben Stelle. Einen an dieser Stelle befindlichen Beobachter erreicht daher das aufprojizierte Bild von sämtlichen holografischen Flächenelementen, und daher sieht der Beobachter das gesamte großformatige Bild. Zur Erzielung eines autostereoskopischen oder stereoskopischen Effekts werden unter unterschiedlichen Aspektwinkeln aufgenommene Bilder unter unterschiedlichen Winkeln auf den holografischen Bildschirm projiziert. Vom Betrachter können die unter unterschiedlichen Aspekten aufgenommenen Bilder nur durch die bildschirmerzeugten vertikalen Streifen nebeneinander gesehen werden. Auf diese Weise kann jedem Auge des Betrachters ein unterschiedliches Bild zugeführt werden.

## Beschreibung

Die Erfindung betrifft ein Verfahren zur Herstellung eines holografischen Bildschirms zur autostereoskopischen oder stereoskopischen Wiedergabe von Bildern und Laufbildern und ein Projektionssystem zur Darstellung von Bildern und Laufbildern in autostereoskopischer oder stereoskopischer Form auf diesem Bildschirm.

Die beiden Augen eines Betrachters nehmen aufgrund ihres Abstands einen Beobachtungspunkt aus verschiedenen Richtungen wahr, so daß zwei geringfügig verschiedene Netzhautbilder entstehen. Beide Netzhautbilder werden im Gehirn zu einem räumlichen Bild verschmolzen.

Um Bilder oder Filme räumlich wiedergeben zu können, müssen daher beiden Augen eines Betrachters getrennte Bildinformationen zugeführt werden. Die beiden unter verschiedenen Aspekten aufgenommenen Bilder, die zusammen das stereoskopische Bild ergeben, müssen mit Hilfe von Bildtrennungsverfahren wiedergegeben werden.

Ein bekanntes Verfahren zur Bildtrennung sieht vor, die beiden unter verschiedenen Aspektwinkeln aufgenommenen Bilder komplementärfarbig übereinandergedruckt bzw. übereinanderprojiziert darzustellen und sodann mittels einer Brille zu betrachten, in welche Farbfilter der entsprechenden Komplementärfarben eingesetzt sind. Der Beobachter, der die Bilder durch die Farbfilterbrille betrachtet, sieht mit einem Auge das eine, mit dem anderen Auge das andere Bild. Es ergibt sich eine dreidimensionale Darstellung.

Eine weitere bekannte Möglichkeit der Bildtrennung kann durch verschiedene Polarisation der unter verschiedenen Aspektwinkeln aufgenommenen Bilder erfolgen. Werden die übereinander projizierten Bilder mit Hilfe einer Polarisationsbrille betrachtet, welche links für die eine, rechts für die andere Polarisationsrichtung durchlässig ist, so können den Augen unterschiedliche Farbbilder zugeführt werden.

Aus der DE-OS 38 35 308 A1 ist eine Vorrichtung zur stereoskopischen Wiedergabe von zwei unter unterschiedlichen Aspektwinkeln aufgenommenen Diapositiven mittels eines holografischen Projektionsschirms bekannt. Dazu enthält der aus einem einzigen Hologramm bestehende Projektionsschirm zwei holografische Aufzeichnungen einer Mattscheibe. Die beiden unter verschiedenen Aspektwinkeln aufgenommenen Bilder werden unter vorbestimmten Winkeln auf den holografischen Projektionsschirm projiziert und derart kanalisiert, daß die beiden Bilder getrennt voneinander in die Augen des Betrachters gelangen. Jedes Auge des Betrachters nimmt eines der Bilder wahr, und daher erhält der Betrachter einen räumlichen Bildeindruck. Die Verwendung einer wie auch immer ausgestalteten Brille zur Bildtrennung ist bei diesem Verfahren überflüssig. Allerdings ist das in der DE-OS 38 35 308 A1 beschriebene Verfahren auf die Wiedergabe relativ kleinformatiger stereoskopischer Bilder und Filme beschränkt, weil die herstellbare Größe der Hologramme begrenzt ist.

Aufgabe der Erfindung ist es, einen holografischen Bildschirm zu schaffen, mit dem sich autostereoskopische oder stereoskopische Bilder und Laufbilder beliebiger Größe darstellen lassen. Weiterhin soll mit Hilfe des holografischen Bildschirms auch eine farbige Wiedergabe der Bilder möglich sein.

Erfindungsgemäß wird diese Aufgabe dadurch gelöst, daß in mehreren aufeinanderfolgenden Zeilen, die sich über die gesamte Bildschirmfläche erstrecken, nebeneinander Pixel oder Flächenelemente bildende, aus fotografischem Material bestehende Elemente angeordnet werden, die dadurch mit Hologrammen einer Fläche, vorzugsweise eines vertikalen Streifens, belichtet werden, daß jedes Element derart mit einem die Fläche oder den Streifen enthaltenden Objektstrahl und einem Referenzstrahl belichtet und entwickelt wird, daß die Fläche oder der Streifen bei der Rekonstruktion mit einem Rekonstruktionsstrahl an derselben Stelle erscheint.

Durch die einzelnen holografischen Elemente werden die auf diese fallenden Strahlen entsprechend der Aufnahmecharakteristik in das aufgenommene Streifenbild kanalisiert, so daß zum autostereoskopischen oder stereoskopischen Sehen auf jedes Auge des Betrachters nur die aus dem entsprechenden Winkel projizierten Bilder fallen. Wegen der Kanalisierung der projizierten Bilder durch die holografischen Elemente kann ein Betrachter grundsätzlich das Bild nur an der Stelle sehen, an der die in den einzelnen Hologrammen aufgenommenen Streifen für ihn erscheinen. Dabei muß der Betrachter keine wie auch immer geartete Brille tragen.

Mit Hilfe des erfindungsgemäßen Verfahrens ist es möglich, einen großflächigen holografischen Projektionsschirm aus einzelnen kleinformatigen holografischen Flächenelementen zusammenzusetzen. Die holografischen Flächenelemente bestehen aus holografischem Filmmaterial und werden vorzugsweise in einer gut handhabbaren Größe, beispielsweise als Quadrat von 10 bis 20 cm Kantenlänge hergestellt. Holografisches Filmmaterial von dieser Größe ist im Handel erhältlich und läßt sich ohne Probleme belichten und entwickeln.

Insbesondere für die autostereoskopische oder stereoskopische Darstellung dreidimensionaler Objekte ist es von Vorteil, wenn der Bereich, in den das aufprojizierte Bild kanalisiert wird, durch schmale vertikale Streifen definiert wird. Hierbei werden die einzelnen aufprojizierten Bilder bzw. Laufbilder in schmale, streifenförmige Bereiche abgebeugt. Da die beiden Augen eines stehenden oder sitzenden Betrachters einen Abstand in horizontaler Richtung aufweisen, kann von jedem Auge eine andere Bildprojektion wahrgenommen werden.

Wenn in den holografischen Elementen als Objekte vertikale Streifen gespeichert werden, wird auch die Wiedergabe farbiger Bilder ermöglicht. Die vertikalen Streifen führen dazu, daß in deren Kernbereich das gesamte Farbspektrum abgebildet wird und nur in den oberen und unteren Randbereichen Farbsäume entstehen, die aber nicht störend in Erscheinung treten, da das Auge hauptsächlich nur die Kernbereiche der Streifen wahrnimmt und aus diesen die Gesamtbilder integriert. In den das gesamte Farbspektrum enthaltenden Kernbereichen der Streifen erscheinen daher entsprechend den aufprojizierten Bildern deren Farbpunkte in echter Farbe, so daß dem Betrachter ein echtfarbiges Bild geboten werden kann.

Bei einer vorteilhaften Ausgestaltung der Erfindung fallen der Objektstrahl und der Referenzstrahl von der gleichen Seite her auf das jeweilige Element ein. Auf diese Weise können Transmissionshologramme erzeugt werden, bei welchen die Projektion der Bilder von der betrachterabgewandten Seite her erfolgt.

Gemäß einer anderen vorteilhaften Ausgestaltung der Erfindung fallen der Objektstrahl und der Referenzstrahl von entgegengesetzten Seiten her auf das jeweilige Element ein. Auf diese Weise werden Reflexionshologramme erzeugt. Falls die holografischen Flächenelemente als Reflexionshologramme ausgeführt werden, muß die Bildprojektion von der Betrachterseite her erfolgen.

Es ist von Vorteil, wenn bei der Belichtung in jedem Element mindestens zwei Streifen gespeichert werden, die bei der Rekonstruktion durch einen Rekonstruktionsstrahl an voneinander entfernten Stellen erscheinen. Wegen der Kanalisierung der Bildpunkte durch die holografischen Elemente kann ein Betrachter grundsätzlich das Bild nur an den Stellen sehen, an der die in den einzelnen Hologrammen aufgenommenen Streifen für ihn erscheinen. Durch Mehrfachbelichtung können in jedem Flächenelement mehrere Streifen gespeichert werden. Diese Streifen erscheinen bei der Rekonstruktion durch den bzw. die Projektoren an voneinander entfernten Stellen. Auf diese Weise können mehrere Personen von verschiedenen Positionen aus die Bilder bzw. Laufbilder betrachten.

Der erfindungsgemäße holografische Bildschirm ist gekennzeichnet durch in aufeinanderfolgenden Reihen und Spalten angeordnete Hologramme von einem oder mehreren vertikalen Streifen, die bei der Rekonstruktion mit einem alle Hologramme beleuchtenden Rekonstruktionsstrahl an derselben Stelle erscheinen.

Der erfindungsgemäße Bildschirm wird aus einer Vielzahl kleinformatiger Einzelhologramme zusammengesetzt, in die jeweils mindestens ein vertikaler Streifen einbelichtet wurde. Bei der Rekonstruktion mit einem alle holografischen Flächenelemente beleuchtenden Rekonstruktionsstrahl erscheinen sämtliche einbelichteten vertikalen Streifen an derselben Stelle. Einen an dieser Stelle befindlichen Beobachter erreicht daher das aufprojizierte Licht von sämtlichen holografischen Flächenelementen, und daher sieht der Beobachter das gesamte aufprojizierte großformatige Bild.

Gemäß einer vorteilhaften Weiterbildung der Erfindung werden die holografischen Flächenelemente miteinander verschweißt. Auf diese Weise kann ein großformatiger Projektionsschirm kostengünstig hergestellt werden.

Eine weitere vorteilhafte Ausbildung der Erfindung sieht vor, die holografischen Flächenelemente auf einen gemeinsamen Träger aus einer Folie oder aus Glas oder Kunststoff aufzubringen. Durch diese Maßnahme kann die Stabilität des Projektionsschirms erhöht werden.

Wenn auf der vom Betrachter abgewandten Seite des Projektionsschirms Platz für die Unterbringung des Projektorsystems ist, ist es von Vorteil, die holografischen Flächenelemente als Transmissionshologramme auszuführen. Die Bilder bzw. Filme werden dann auf die vom Betrachter abgewandte (rückwärtige) Seite des Projektionsschirms projiziert. Der Vorteil ist, daß der Betrachter mehr Platz zur Verfügung hat, weil er nicht durch das Projektorsystem behindert wird. Ein weiterer Vorteil ist, daß das Projektorsystem dem Betrachter verborgen bleibt.

Alternativ dazu kann es von Vorteil sein, die holografischen Flächenelemente als Reflexionshologramme auszuführen. Dies bedeutet, daß die Bilder bzw. Filme von der Seite des Betrachters her auf den Schirm projiziert werden. Diese Lösung ist insbesondere dann von Vorteil, wenn der rückwärtige Teil des Projektionsschirms nicht zugänglich ist bzw. wenn dort nicht genügend Platz für die Unterbringung des Projektorsystems ist. Dabei ist es insbesondere von Vorteil, wenn der Träger für die Reflexionshologramme schwarz ausgebildet ist, denn dadurch können Fremdlichtreflexe unterdrückt werden. Außerdem wird dadurch der Kontrast der Bilddarstellung verbessert.

Das erfindungsgemäße Projektionssystem zur Darstellung von Bildern und Laufbildem auf dem holografischen Bildschirm in autostereoskopischer oder stereoskopischer Form umfaßt mindestens einen Projektor, der den holografischen Bildschirm mit Bildern enthaltenden Strahlen beaufschlagt.

Da von dem Projektionssystem die unter unterschiedlichen Aspektwinkeln aufgenommenen Bilder unter unterschiedlichen Winkeln auf den Projektionsschirm projiziert werden, können die unter unterschiedlichen Aspekten aufgenommenen Bilder nur durch die bildschirmerzeugten vertikalen Streifen nebeneinander gesehen werden. Auf diese Weise sieht jedes Auge eines Betrachters nur einen Aspekt (ein Bild), und dadurch entsteht für den Betrachter ein autostereoskopisches oder stereoskopisches Bild. Ein autostereoskopisches Sehen wird dann ermöglicht, wenn mehr als zwei Aspekte aufeinanderfolgend unter unterschiedlichen Winkeln auf den Schirm projiziert werden.

Es ist von Vorteil, wenn die Pupille von mindestens einem Projektor über Strahlablenkmittel Bilder eines Objekts auf den Projektionsschirm wirft, wobei eine vorbestimmte Anzahl aufeinanderfolgender Bilder jeweils unter unterschiedlichen Aspektwinkeln aufgenommen wurde. Dabei werden die Strahlablenkmittel synchron zum Bildwechsel so weitergeschaltet, daß unter unterschiedlichen Aspektwinkeln aufgenommene Bilder unter unterschiedlichen Projektionswinkeln auf den Projektionsschirm geworfen werden.

Mit Hilfe von Strahlablenkmitteln kann also ein Projektor für mehrere verschiedene Projektionswinkel verwendet werden. Dazu müssen die Strahlablenkmittel hinreichend schnell schaltbar sein. Das projizierte Bild muß im Takt der Strahlablenkmittel wechseln.

Die Strahlablenkmittel, die den Projektionswinkel generieren, und die aufeinanderfolgende, unter unterschiedlichen Winkeln erscheinende ähnliche Bilder projizieren, können beispielsweise aus einem entsprechend gesteuerten Dreh- oder Kippspiegel bestehen. Mit Hilfe eines derartigen Spiegels kann für jede Bildprojektion die virtuelle Projektorposition variiert werden.

Um Bilder mit guter Brillanz ohne Flimmern darstellen zu können, werden vorzugsweise mehrere Projektoren vorgesehen, die gleichzeitig ihre Bilder auf den Bildschirm werfen. Selbstverständlich müssen diese mehreren Projektoren Bilder projizieren, die in ihrer Bildwechselfrequenz relativ zueinander synchronisiert sein müssen.

Nach einer anderen Ausgestaltung ist vorgesehen, daß in zwei Reihen untereinander versetzt zueinander Objektive von Projektoren angeordnet sind, die die Bilder auf den Bildschirm projizieren, wobei jeweils aufeinanderfolgende Bilder des gleichen Objekts mit unterschiedlichen Aspektwinkeln und Projektionswinkeln projiziert werden.

Um bei Laufbildern ein flimmerfreies Bild zu erhalten, muß die Bildwechselfrequenz entsprechend hoch sein. Enthalten die Projektoren aufeinanderfolgend jeweils ähnliche Bilder eines Objektes unter mehreren Aspektwinkeln, muß die Bildwechselfrequenz mit dem der Anzahl der Aspektwinkel entsprechenden Faktor multipliziert werden. Dabei ist die Bildwechselfrequenz die Frequenz, bei der ein flimmerfreies Bild erscheint.

Vorzugsweise sind die Projektoren des Projektorsystems mit SLMs (Spacial Light Modulators) ausgestattet, durch welche den Projektionsstrahlen die darzustellende Information aufgeprägt werden kann. SLMs sind Flüssigkristallelemente, die ähnlich funktionieren wie ein LCD-Display. Sie wirken als Lichtfilter und prägen dem Projektionslichtstrahl das zu projizierende Bild in Form einer Amplitudenmodulation auf. Die hohe Bildwechselfrequenz von SLMs erlaubt auch die Projektion von Filmsequenzen.

Gemäß einer weiteren vorteilhaften Ausgestaltung der Erfindung weisen die Projektoren des Projektorsystems Korrekturoptiken zur projektionswinkelabhängigen Entzerrung der projizierten Bilder auf. Bei schrägern Einfall des Projektionslichtstrahls auf den Projektionsschirm kommt es zu einer Bildverzerrung. Mit Hilfe der vorgeschlagenen Korrekturoptik läßt sich eine Entzerrung der projizierten Bilder in Abhängigkeit vom jeweiligen Projektionswinkel erreichen, so daß trotz des schrägen Einfalls des Projektionslichtstrahls ein scharfes und verzerrungsfreies Bild erhalten werden kann.

Anstelle einer tatsächlichen Belichtung können auch computergenerierte Hologramme (CGH) als holografische Flächenelemente verwendet werden. Dadurch wird die übliche interferometrische Belichtung von holografischem Film überflüssig. Die Umsetzung eines berechneten Interferenzbildes in ein Computergeneriertes Hologramm (CGH) bereitet technisch keine Probleme.

Weitere Einzelheiten und Vorteile der Erfindung werden nachfolgend anhand mehrere in den Zeichnungen dargestellter Ausführungsbeispiele erläutert. Es zeigen:
- Fig. 1: eine schematische Darstellung einer Anordnung zur Herstellung des holografischen Bildschirms;
- Fig. 2: den erfindungsgemäßen holografischen Projektionsschirm, der von einem Projektionsstrahl beaufschlagt wird;
- Fig. 3A: den erfindungsgemäßen Projektionsschirm, der von zwei Projektionsstrahlen unter verschiedenen Projektionswinkeln beaufschlagt wird;
- Fig. 3B: eine Vielzahl von auf den Projektionsschirm projizierten Bilddarstellungen, welche von verschiedenen vertikalen, streifenförmigen "Fenstern" aus einsehbar sind;
- Fig. 4: einen holografischen Projektionsschirm, bei dem pro Flächenelement mehrere vertikale Streifen einbelichtet worden sind;
- Fig. 5: eine Projektoranordnung, bei der mit Hilfe von Strahlablenkmitteln die projizierten Bilder den holografischen Projektionsschirm unter verschiedenen Projektionswinkeln beaufschlagen können.

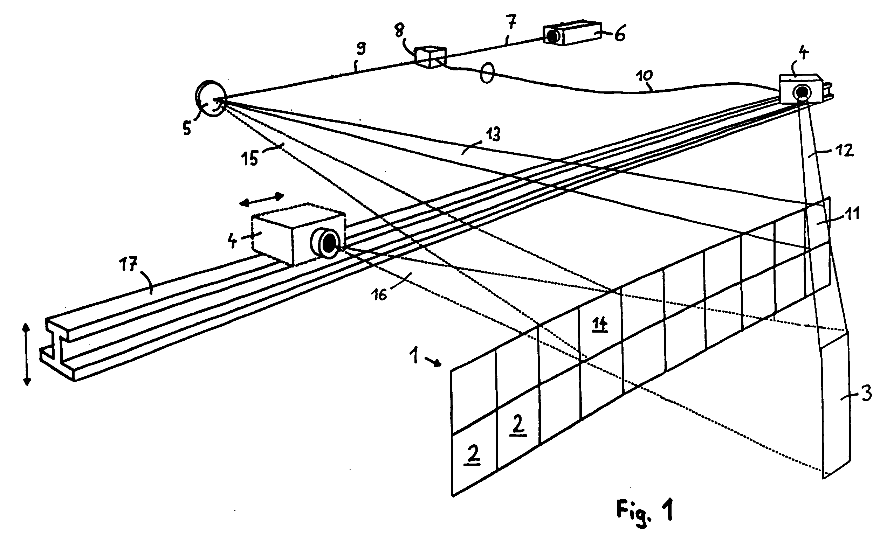

In Fig. 1 ist eine Anordnung zur Herstellung des erfindungsgemäßen holografischen Projektionsschirms 1 dargestellt. Dieser großformatige holografische Projektionsschirm soll aus einer Vielzahl von holografischen Flächenelementen 2 zusammengesetzt werden. Die Belichtung der einzelnen holografischen Flächenelemente 2, welche aus holografischem Aufzeichnungsmaterial bestehen, erfolgt dabei mit Hilfe der in Fig. 1 gezeigten Anordnung.

Zunächst wird das zu belichtende holografische Flächenelement ausgewählt, beispielsweise das holografische Flächenelement 11. In diesem holografischen Flächenelement soll nun ein von einem Projektor 4 erzeugter Lichtkegel 12 holografisch aufgezeichnet werden, welcher in dem vertikalen Streifen 3 konvergiert. Zur Aufzeichnung des Lichtkegels 12 muß das holografische Flächenelement zusätzlich mit einem Referenzlaserstrahl 13 beaufschlagt werden. Die entstehende Interferenz zwischen dem Lichtkegel 12 und dem Referenzlaserstrahl 13 wird dann als Hologramm aufgezeichnet.

Der Laser 6 erzeugt dabei sowohl das Licht für den Projektor 4 als auch das Licht des Referenzstrahls 13. Dazu wird der erzeugte Laserstrahl 7 mittels des Strahlteilers 8 in zwei Anteile aufgespalten, nämlich in den Referenzstrahl 9 und in den Objektstrahl 10, der mittels eines Glasfaserkabels zum Projektor 4 geleitet wird. Der Referenzlaserstrahl 9 wird mittels des ortsfesten Drehspiegels 5 zu dem holografischen Flächenelement 11 gelenkt, das dann belichtet wird.

In dieser Weise müssen sämtliche holografischen Flächenelemente belichtet werden, wobei der vertikale Streifen 3 bei der Belichtung alter Flächenelemente am gleichen Ort befindlich ist. Die Lage des Lichtstreifens 3 entspricht dabei der späteren Position eines Betrachters.

Zur Belichtung der Flächenelemente kann eine in vertikaler Richtung parallel zu sich selbst bewegbare Schiene 17 vorgesehen werden, auf der der Projektor 4 verschieblich angeordnet ist. Sowohl der Referenzlaserstrahl als auch der vom Projektor 4 erzeugte Streifen 3 werden von einem Flächenelement zum nächsten weitergeschaltet. Beispielsweise wird das Flächenelement 14 belichtet, indem es vom Referenzstrahl 15 und vom Lichtkegel 16 beaufschlagt wird. Nach der Belichtung einer Zeile von nebeneinanderliegenden Flächenelementen wird die Schiene 17 um eine Zeile nach unten geschaltet und in entsprechender Weise werden dann in den Flächenelementen der nächsten Zeile die jeweiligen Streifen aufgezeichnet.

Auch durch Vorschub des Filmes, bzw. durch Winkelbewegung des Projektors und der Referenz kann die Belichtung der Flächenelemente durchgeführt werden.

Der holografische Bildschirm 1 kann auch in der Weise hergestellt werden, daß die einzelnen Elemente aus separatem Fotomaterial bestehen, das in der beschriebenen Weise zur holografischen Speicherung der Objekte aufeinanderfolgend belichtet wird.

Die einzelnen Elemente können dann zu einem holografischen Bildschirm zusammengefügt werden, beispielsweise dadurch, daß sie auf einer Trägerplatte aus Glas, transparentem oder schwarzem Kunststoff oder einer Folie fixiert werden. Sie können auch zu Streifen miteinander verbunden werden, wobei die Streifen dann zu dem Schirm, beispielsweise durch Schweißen, zusammengefügt werden können.

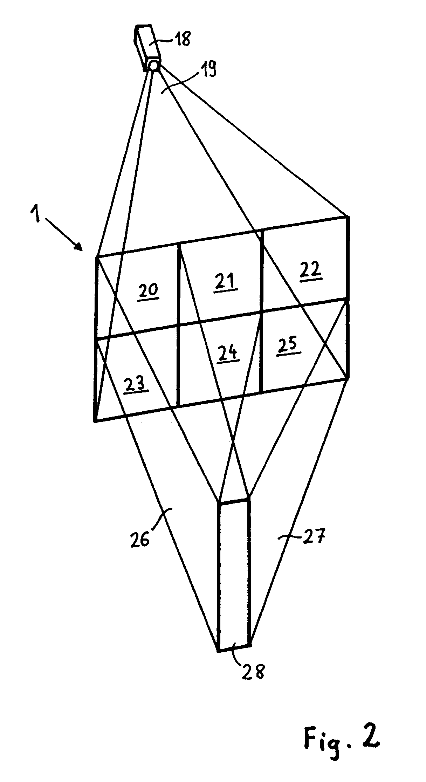

In Fig. 2 ist ein fertiger Bildschirm 1 dargestellt, der aus zwei Zeilen und drei Spalten von holografischen Flächenelementen 20 bis 25 besteht. Die holografischen Flächenelemente 20 bis 25 sind in der in Fig. 1 dargestellten Art und Weise belichtet worden und enthalten daher die holografische Aufzeichnung einer Fläche, vorzugsweise eines vertikalen Streifens. Der Projektor 18 erzeugt einen Projektionsstrahl 19 und wirft so ein großformatiges (Farb-) Bild auf den holografischen Bildschirm 1. Die holografischen Flächenelemente 20 bis 25 wirken dabei als Mattscheiben, auf denen das vom Projektor 18 erzeugte reelle Bild wie auf einer Leinwand aufgefangen wird.

Der einfallende Projektionsstrahl 19 wirkt aber darüberhinaus auch als Rekonstruktionsstrahl für die in den holografischen Flächenelementen gespeicherten Streifen. Beispielsweise wird durch den auf das holografische Flächenelement 20 einfallenden Projektionsstrahl der Lichtkegel 26 und der schmale vertikale Streifen 28 so rekonstruiert, wie er bei der Aufnahme (Fig. 1) aufgezeichnet worden war. Dies hat zur Folge, daß das Licht, das auf das Flächenelement 20 projiziert wird, lediglich in den Kegel 26 abgebeugt wird. Ein Betrachter, dessen Auge sich am Ort des Streifens 28 befindet, kann das auf das Flächenelement 20 projizierte Bild einsehen, weil dieses Licht ihn erreicht. Befindet sich sein Auge jedoch außerhalb des Kegels 26, so kann er das auf das Flächenelement 20 projizierte Bild nicht sehen. Dem vertikalen Streifen 28 kommt insofern die Funktion eines "Sichtfensters" zu.

Erfindungsgemäß wurde jedem der Flächenelemente 20 bis 25 ein vertikaler Streifen so einbelichtet, daß er bei Beleuchtung mit einem Referenzstrahl für alle Flächenelemente an derselben Stelle erscheint. Dies kann in Fig. 2 am Beispiel der Flächenelemente 20 und 25 gesehen werden: Wenn der Projektionsstrahl 19 das Flächenelement 25 beaufschlagt, so rekonstruiert der den Kegel 27 und den vertikalen Streiten 28. Der Streifen 28 erscheint für alle Flächenelemente 20 bis 25 an derselben Position. Deshalb wirkt der Streifen 28 als Einsichtsfenster für sämtliche Flächenelemente 20 bis 25, und daher kann ein Beobachter, dessen Auge sich am Ort des Streifens 28 befindet, das gesamte großformatige Bild, wie es auf den Bildschirm 1 projiziert wird, sehen. Wenn sich sein Auge aber nicht innerhalb des "Sichtfensters" 28 befindet, dann sieht er nichts, weil ihn kein Streulicht von den Flächenelementen 20 bis 25 erreicht.

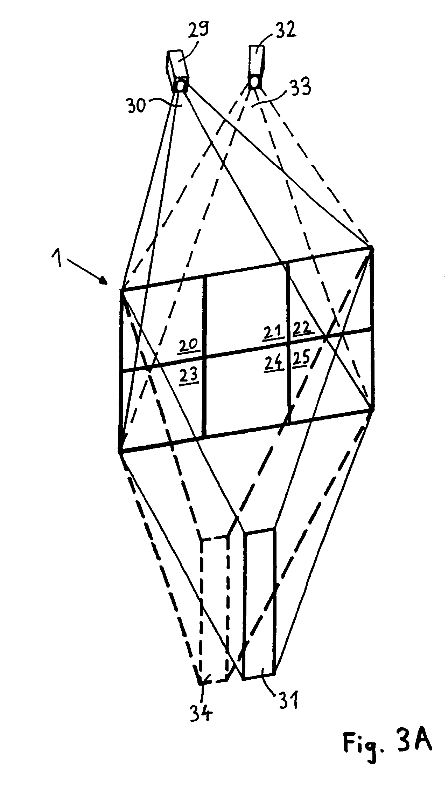

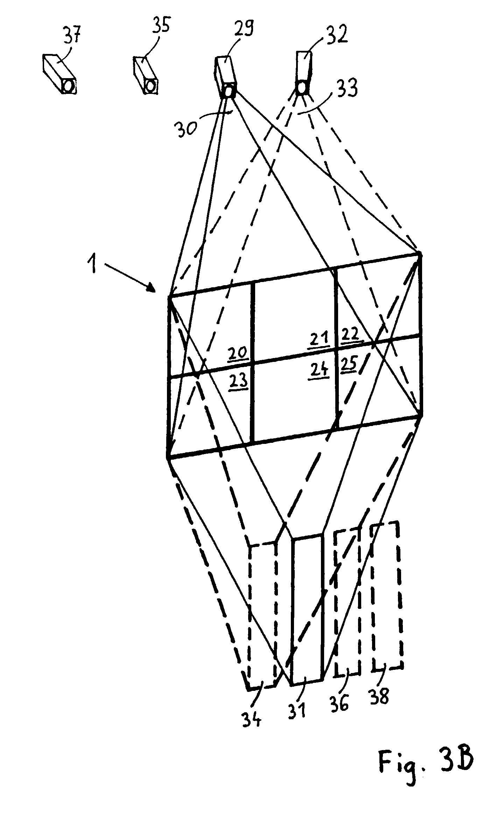

In Fig. 3A ist gezeigt, wie der erfindungsgemäße Bildschirm 1 für die autostereoskopische oder stereoskopische Projektion verwendet werden kann. Um einen dreidimensionalen Bildeindruck zu ermöglichen, müssen den beiden Augen des Betrachters unterschiedliche Bildinformationen zugänglich gemacht werden. Dies geschieht dadurch, daß die beiden Projektoren 29 und 32 zwei unter verschiedenen Aspektwinkeln aufgenommene Darstellungen einer Szene bzw. eines Objekts auf den Bildschirm 1 projizieren. Die beiden Bilder sind dabei geringfügig unterschiedlich. Der Projektionsschirm 1 besteht wieder aus den Flächenelementen 20 bis 25, welche in der in Fig. 1 beschriebenen Weise mit einem vertikalen Streifen belichtet wurden.

Der Projektionsstrahl 30 fällt unter einem ersten Projektionswinkel auf den Bildschirm 1 ein und rekonstruiert den in allen Flächenelementen aufgezeichneten Streifen 31. Dies bedeutet, daß die vom Projektor 29 projizierte Objektansicht von dem als Fenster wirkenden Streifen 31 aus gesehen werden kann. Da der Projektionsstrahl 33 unter einem anderen Projektionswinkel auf den Bildschirm 1 einfällt als der Projektionsstrahl 30, rekonstruiert er den allen Flächenelementen gemeinsamen Streifen 34 auch an einer anderen Stelle. Auch der so rekonstruierte Streifen 34 wirkt als Einsichtsfenster, allerdings für das vom Projektor 32 projizierte Bild. Die Lage des Einsichtsfensters hängt also von dem Projektionswinkel ab, unter dem der Projektionsstrahl den holografischen Bildschirm beaufschlagt.

Ein stereoskopischer Effekt ergibt sich dann, wenn ein Betrachter so vor dem Bildschirm 1 steht, daß sich sein rechtes Auge im Bereich des Streifens 31 und sein linkes Auge im Bereich des Streifens 34 befindet. Dann sieht das rechte Auge das vom Projektor 29 projizierte großformatige Bild, und das linke Auge sieht das vom Projektor 32 projizierte Bild. Auf diese Weise können den beiden Augen des Betrachters unterschiedliche Bilddarstellungen zugeführt werden, und daraus ergibt sich für den Betrachter die für dreidimensionales Sehen wichtige Tiefeninformation.

In Fig. 3B ist dargestellt, wie eine Vielzahl von Projektoren (29, 32, 35, 37) jeweils unterschiedliche Bilder auf den Bildschirm 1 projiziert, wobei jeder Projektor sein eigenes Sichtfenster (31, 34, 36, 38) entstehen läßt. Vom Streifen 31 aus kann also das vom Projektor 29 projizierte Bild eingesehen werden, vom Streifen 34 aus ist das Projektionsbild des Projektors 32 sichtbar, etc. Der Abstand der Projektoren bestimmt dabei den Abstand der zugehörigen vertikalen Streifen. Es ist von Vorteil, den Abstand der Projektoren so zu wählen, daß die durch sie erzeugten Streifen bzw. Sichtfenster aneinander anschließen. Ein Überlapp der Streifen sollte vermieden werden, da in dem Überlappungsgebiet zwei unterschiedliche Bilder auf einmal sichtbar wären. Aber auch ein Abstand zwischen den Streifen wäre von Nachteil, weil es dann zwischen zwei Streifen einen Bereich gibt, in dem der Betrachter keines der projizierten Bilder sieht. Wenn die von den Projektoren erzeugten Streifen aneinander anschließen, wird eine autostereoskopische Darstellung ermöglicht: Der Betrachter kann durch Bewegen seines Kopfes innerhalb des durch die Streifen 34, 31, 36 und 38 definierten Bereichs in gewissem Umfang bestimmen, unter welchem Blickwinkel er die projizierte Szene sieht.

Die Verwendung eines schmalen vertikalen Streifens ist auch für Farbprojektionen von Vorteil. Bei Farbprojektionen entsteht das Problem, daß verschiedenfarbige Lichtanteile der Projektion durch das Hologramm, welches man sich als Gitter veranschaulichen kann, unterschiedlich stark gebeugt werden. Die Verwendung vertikaler Streifen führt dazu, daß in deren Kernbereich das gesamte Spektrum abgebildet wird und nur in den oberen und unteren Randbereichen Farbsäume entstehen, die aber nicht störend in Erscheinung treten, da das Auge hauptsächlich nur die Kernbereiche der Streifen wahrnimmt.

Bei der in Fig. 3A bzw. 3B gezeigten Ausführungsform kann ein Betrachter nur dann ein autostereoskopisches oder stereoskopisches Bild sehen, wenn er sich an dem Ort der Sichtfenster 31 und 34 bzw. 31, 34, 36 und 38 befindet. Um nun mehreren an unterschiedlichen Orten stehenden oder sitzenden Betrachtern die Möglichkeit zu geben, autostereoskopische oder stereoskopische Bilddarstellungen zu sehen, müssen in jedem Flächenelement mehrere vertikale Streifen einbelichtet werden. Wichtig ist, daß zur Herstellung der Flächenelemente 39 bis 44 die in Fig. 1 gezeigte Anordnung modifiziert werden muß: Bei der Belichtung der einzelnen Flächenelemente muß jedes Flächenelement von einem Referenzstrahl und mehreren Objektstrahlen beaufschlagt werden.

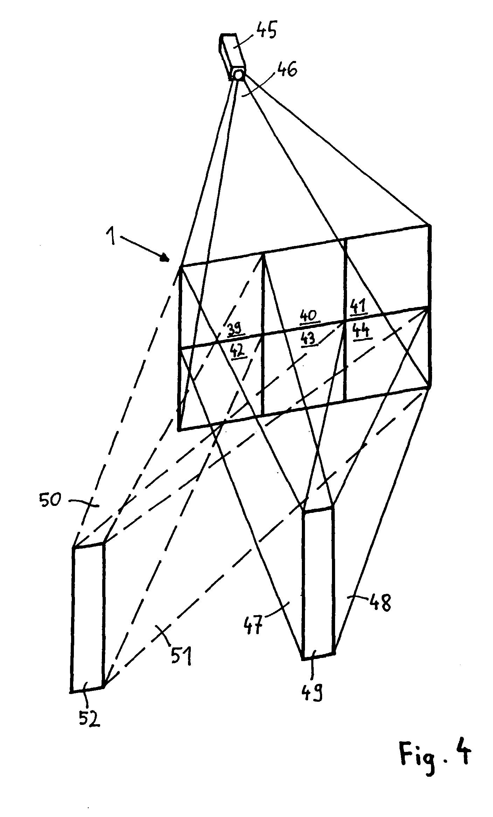

Ein derartiger Bildschirm 1 ist in Fig. 4 dargestellt. Der erste Streifen befindet sich dabei für alle holografischen Flächenelemente an einer ersten Stelle, und der zweite Streifen befindet sich für alle Flächenelemente übereinstimmend an einer zweiten Stelle. Bei Beaufschlagung des aus den holografischen Flächenelementen 39 bis 44 bestehenden Bildschirms 1 mit einem Projektionsstrahl 46 werden pro Flächenelement die beiden einbelichteten Streifen 49 und 52 rekonstruiert. Die rekonstruierten Lichtkegel sind für die Flächenelemente 39 und 44 explizit dargestellt. Wenn das Flächenelement 39 von dem Projektionsstrahl 46 beaufschlagt wird, so werden die Lichtkegel 47 und 50 sowie die Streifen 49 und 52 rekonstruiert. Wenn das Flächenelement 44 mit dem Referenzstrahl 46 beaufschlagt wird, dann werden die Lichtkegel 48 und 51 sowie die Streifen 49 und 52 rekonstruiert. Auch bei Beleuchtung der Flächenelemente 40 bis 43 mit einem alle Elemente beleuchtenden Referenzstrahl 46 erscheinen die rekonstruierten Streifen 49 und 52 an derselben Stelle.

Sowohl der Streifen 49 als auch der Streifen 52 dienen als Sichtfenster für das durch den Projektionsstrahl 46 projizierte Bild. Die großformatige Bildprojektion kann also sowohl von einem Betrachter am Ort des Streifens 49 als auch von einem Betrachter am Ort des Streifens 52 gleichzeitig eingesehen werden. Ein außerhalb der Streifen 49 und 52 befindlicher Betrachter sieht das projizierte Bild dagegen nicht. Durch Projektion mehrerer Bilder unter verschiedenen Projektionswinkeln kann sowohl für den Betrachter am Ort des Streifens 49 als auch für den zweiten Betrachter am Ort des Streifens 52 ein autostereoskopischer oder stereoskopischer Effekt erzielt werden.

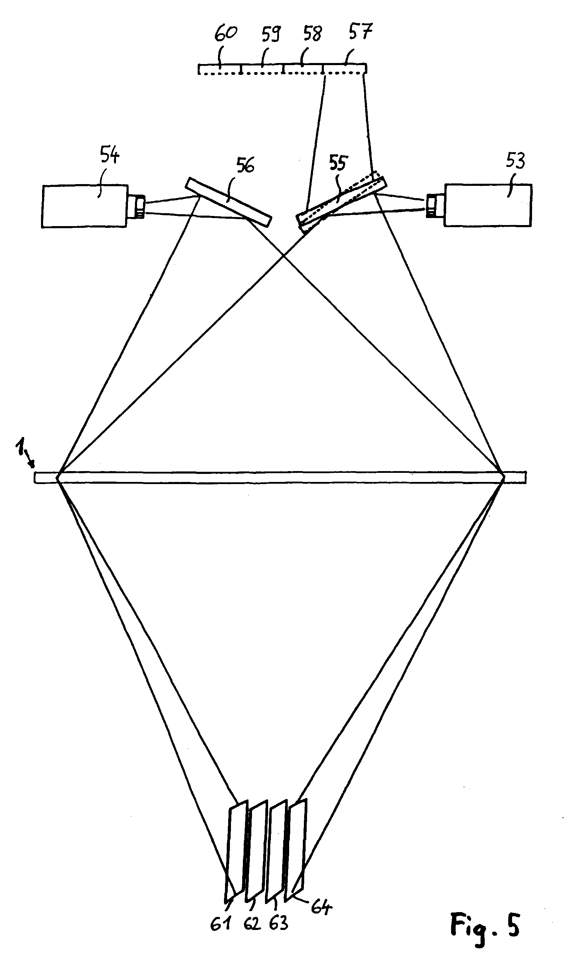

Anstatt verschiedene Projektoren zu verwenden, ist in Fig. 5 eine Ausführungsform dargestellt, bei der der Projektionswinkel mit Hilfe von Strahlablenkmitteln variiert wird. Solche Strahlablenkmittel können beispielsweise Dreh- oder Kippspiegel sein.

Nach dem Ausführungsbeispiel der Fig. 5 sind zwei Filmprojektoren 53, 54 vorgesehen, deren Bilder durch Drehspiegel 55, 56 auf den holografischen Bildschirm 1 geworfen werden. Enthalten die von den Projektoren 53, 54 projizierten Bilder aufeinanderfolgend jeweils vier Aspekte des gleichen Bildes, so sind die Drehspiegel 55, 56 derart gesteuert, daß sie jedes unter einem anderen Aspektwinkel erscheinende Bild um einen Projektionskanal weitergeschaltet auf den holografischen Bildschirm 1 projizieren.

Je nach Stellung des Kippspiegels ergibt sich eine der virtuellen Projektorpositionen 57, 58, 59 oder 60, was dazu führt, daß der Projektionsstrahl unter unterschiedlichen Einstrahlwinkeln auf den Projektionsschirm 1 gelangt.

In dem dargestellten Ausführungsbeispiel ist vorgesehen, daß jedes Bild nacheinander unter vier Aspektwinkeln erscheint. Jedes Bild wird daher der Reihe nach unter Weiterschaltung um jeweils eine Position in vier aufeinanderfolgenden Schaltschritten projiziert, so daß die unter unterschiedlichen Aspektwinkeln aufgenommenen Bilder nacheinander durch die als Einsichtsfenster wirkenden Streifen 61, 62, 63 und 64 zu sehen sind.

Die Veränderung der Stellung des Spiegels 55 muß mit der Bildwechselfrequenz des Projektors 53 synchronisiert werden. Für einen flimmerfreien Bildeindruck ist eine hinreichend hohe Bildwechselfrequenz erforderlich. Bei der Darstellung von Filmen ist eine Bildwechselfrequenz erforderlich, die sich aus der Multiplikation der für eine kontinuierliche Filmdarstellung erforderlichen Bildwechselfrequenz (von ca. 25 bis 50 Hz) und der Zahl der virtuellen Projektorpositionen ergibt.

## Patentansprüche

1. Verfahren zur Herstellung eines holografischen Bildschirms zur autostereoskopischen oder stereoskopischen Wiedergabe von Bildern und Laufbildern,
dadurch gekennzeichnet,
daß in mehreren aufeinanderfolgenden Zeiten, die sich über die gesamte Bildschirmfläche erstrecken, nebeneinander Pixel oder Flächenelemente bildende, aus fotografischem Material bestehende Elemente angeordnet werden, die dadurch mit Hologrammen einer Fläche, vorzugsweise eines vertikalen Streifens, belichtet werden, daß jedes Element derart mit einem die Fläche oder den Streifen enthaltenden Objektstrahl und einem Referenzstrahl belichtet und entwickelt wird, daß die Fläche oder der Streifen bei der Rekonstruktion mit einem Rekonstruktionsstrahl, der alte Elemente beleuchtet, an derselben Stelle erscheint.

2. Verfahren nach Anspruch 1, dadurch gekennzeichnet, daß der Objektstrahl und der Referenzstrahl von der gleichen Seite her auf das jeweilige Element einfallen.

3. Verfahren nach Anspruch 1, dadurch gekennzeichnet, daß der Objektstrahl und der Referenzstrahl von entgegengesetzten Seiten her auf das jeweilige Element einfallen.

4. Verfahren nach einem der Ansprüche 1 bis 3, dadurch gekennzeichnet, daß bei der Belichtung in jedem Element mindestens zwei Streifen gespeichert werden, die bei der Rekonstruktion durch einen Rekonstruktionsstrahl an voneinander entfernten Stellen erscheinen.

5. Holografischer Bildschirm, gekennzeichnet durch in aufeinanderfolgenden Reihen und Spalten angeordnete Hologramme von einem oder mehreren vertikalen Streifen, die bei der Rekonstruktion mit einem alle Hologramme beleuchtenden Rekonstruktionsstrahl an derselben Stelle erscheinen.

6. Holografischer Bildschirm nach Anspruch 5, dadurch gekennzeichnet, daß die Hologramme miteinander verschweißt sind.

7. Holografischer Bildschirm nach Anspruch 5 oder 6, dadurch gekennzeichnet, daß die Hologramme auf einen gemeinsamen Träger aus einer Folie oder aus Glas oder Kunststoff aufgebracht sind.

8. Holografischer Bildschirm nach einem der Ansprüche 5 bis 7, dadurch gekennzeichnet, daß der Bildschirm bzw. die Elemente als Transmissionshologramme ausgebildet sind.

9. Holografischer Bildschirm nach einem der Ansprüche 5 bis 7, dadurch gekennzeichnet, daß der Bildschirm bzw. die Elemente als Reflexions (Lippmann-Bragg) Hologramme ausgebildet sind.

10. Holografischer Bildschirm nach Anspruch 9, dadurch gekennzeichnet, daß der Träger für Reflexionshologramme schwarz ausgebildet ist.

11. Projektionssystem zur Darstellung von Bildern und Laufbildern auf dem holografischen Bildschirm in autostereoskopischer oder stereoskopischer Form, dadurch gekennzeichnet, daß zur Darstellung autostereoskopischer oder stereoskopischer Bilder oder Laufbilder mindestens ein Projektor vorgesehen ist, der den holografischen Bildschirm mit Bildern enthaltenden Strahlen beaufschlagt.

12. Projektionssystem nach Anspruch 11, dadurch gekennzeichnet, daß mindestens ein Projektor vorgesehen ist, dessen Pupille über Strahlablenkmittel Bilder eines Objektes auf den Projektionsschirm wirft, wobei eine vorbestimmte Anzahl aufeinanderfolgender Bilder jeweils unter unterschiedlichen Aspektwinkeln aufgenommen wurde, und wobei die Strahlablenkmittel synchron zum Bildwechsel so weitergeschaltet werden, daß unter unterschiedlichen Aspektwinkeln aufgenommene Bilder unter unterschiedlichen Projektionswinkeln auf den Projektionsschirm geworfen werden.

13. Projektionssystem nach Anspruch 12, dadurch gekennzeichnet, daß der Strahl bzw. die Strahlen über die Strahlablenkwinkel um jeweils einen vertikalen Streifen weitergeschaltet werden.

14. Projektionssystem nach Anspruch 12 oder 13, dadurch gekennzeichnet, daß als Strahlablenkmittel Dreh- bzw. Kippspiegel verwendet werden.

15. Projektionssystem nach einem der Ansprüche 11 bis 14, dadurch gekennzeichnet, daß mehrere Projektoren gleichzeitig ihre Bilder auf den holografischen Bildschirm projizieren.

16. Projektionssystem nach einem der Ansprüche 11 bis 15, dadurch gekennzeichnet, daß in mindestens zwei Reihen untereinander und versetzt zueinander Projektorobjektive angeordnet sind, die die Bilder auf den Bildschirm projizieren, wobei jeweils aufeinanderfolgende Bilder des gleichen Objekts mit unterschiedlichen Aspektwinkeln und Projektionswinkeln projiziert werden.

17. Projektionssystem nach einem der Ansprüche 11 bis 16, dadurch gekennzeichnet, daß die Wechselfrequenz so groß ist, daß jedes unter einem anderen Aspektwinkel aufgenommene Bild bzw. Laufbild für das Auge flimmerfrei erscheint.

18. Projektionssystem nach einem der Anspüche 11 bis 17, dadurch gekennzeichnet, daß der Projektor bzw. die Projektoren SLMs aufweisen.

19. Projektionssystem nach einem der Anspüche 11 bis 18, dadurch gekennzeichnet, daß der Projektor bzw. die Projektoren Korrekturoptiken zur projektionswinkelabhängigen Entzerrung der projizierten Bilder bzw. Laufbilder aufweisen.

20. Verfahren zur Herstellung eines holografischen Bildschirms nach Anspruch 5, dadurch gekennzeichnet, daß die Hologramme oder holografischen Elemente durch einen Computer generiert werden.
